# EUROPEAN PATENT SPECIFICATION

(11) **EP 4 209 715 B1**
(45) Date of publication and mention of the grant of the patent: **27.08.2025**
(21) Application number: 22168170.3
(22) Date of filing: 13.04.2022
(51) Int. Cl.: F23R 3/28, F23R 3/12, F23R 3/34

(54) **COMBUSTOR NOZZLE, COMBUSTOR, AND GAS TURBINE INCLUDING THE SAME**
BRENNERDÜSE, BRENNKAMMER UND GASTURBINE DAMIT
BUSE DE CHAMBRE DE COMBUSTION, CHAMBRE DE COMBUSTION ET TURBINE À GAZ LES COMPRENANT

(30) Priority: 06.01.2022 KR 20220001919
(43) Date of publication of application: 12.07.2023
(73) Proprietor: Doosan Enerbility Co., Ltd., Seongsan-gu Changwon-si, Gyeongsangnam-do 51711 (KR)
(72) Inventor: KIM, Ho Keun, 34070 Daejeon (KR)
(74) Representative: BCKIP Part mbB

(56) References cited:
- KR-A- 20200 027 894
- US-A1- 2011 083 439
- US-A1- 2012 291 446
- US-A1- 2018 128 491
- US-A1- 2018 363 551
- US-A1- 2019 360 697

## Description

### BACKGROUND

### Technical Field

The present invention relates to a combustor nozzle, a combustor, and a gas turbine including the same, and more particularly, to a combustor nozzle using fuel containing hydrogen, a combustor, and a gas turbine including the same.

### Description of the Related Art

A gas turbine is a power engine that mixes air compressed by a compressor with fuel for combustion and rotates a turbine with a high-temperature gas produced by the combustion. The gas turbine is used to drive a generator, an aircraft, a ship, a train, or the like.

The gas turbine includes a compressor, a combustor, and a turbine. The compressor sucks and compresses outside air, and transmits the compressed air to the combustor. The air compressed by the compressor is in a high-pressure and high-temperature state. The combustor mixes the compressed air compressed by the compressor with fuel and burns a mixture to produce combustion gas which is discharged to the turbine. Turbine blades in the turbine are rotated by the combustion gas to generate power. The generated power is used in various fields such as generating electric power and actuating machines.

Fuel is injected through nozzles installed in each combustor section of the combustor, and the nozzles enable injection of gas fuel and liquid fuel. Recently, it is recommended to use hydrogen fuel or fuel containing hydrogen to suppress carbon dioxide emission.

However, because hydrogen has a high combustion rate, when hydrogen fuel or fuel containing hydrogen is burned in a gas turbine combustor, the flame formed in the gas turbine combustor approaches the structure of the gas turbine combustor and is heated, which may cause a problem in the reliability of the gas turbine combustor.

In order to solve this problem, Korean Patent Application Publication No. 10-2020-0027894 discloses a combustor nozzle having a fuel supply duct. However, in the nozzle having the fuel supply duct, it may be difficult to uniformly mix fuel and air because a swirler is not installed in the nozzle.

US 2019 / 0 360 697 A1 discloses a fuel injector for a gas turbine comprising a plenum defined by an upstream plate, a downstream plate, and a circumferential wall. A fuel supply pipe opens into the plenum so that gaseous fuel can be supplied to the plenum through the supply pipe. The injector further includes a plurality of premix tubes that extend through the plenum and are supported by the upstream and the downstream plate, respectively. Each premix tube has radial through holes to communicate an inner space of the respective premix tube with the plenum to receive fuel from the plenum. An inlet port of each premix tub includes a guide part that forms a swirler to swirl air introduced into the premix tube at the inlet port.

US 2011 / 0 083 439 A1 discloses a structure in which different fuel gases are introduced into a mixing tube via through holes that are spaced from oneanother in an upstream-downstream-direction and that are inclined relative to an axis of the mixing tube. Air is introduced only at an inlet port into the mixing tube.

### SUMMARY

It is one of the ideas of the present invention to provide a combustor nozzle capable of minimizing backfire and improving fuel-air mixing characteristics to reduce NO_{X} emission and increase flame stability by swirlers and fuel inlet holes formed in each injection tube, a combustor, and a gas turbine including the same.

Additional concepts of the invention will be set forth in part in the description which follows and, in part, will become apparent from the description, or may be learned by practice of the exemplary embodiments.

To this end, the present invention provides a nozzle in accordance with claim 1.

According to a first aspect of the invention, there is provided a nozzle for a combustor configured to burn fuel containing hydrogen including: a fuel supply duct including a plurality of injection tubes through which air and fuel flow and a fuel passage through which fuel flows, a plurality of swirlers formed on a side surface of each of the plurality of injection tubes to guide air outside the injection tube to be introduced thereinto for swirling, and a plurality of fuel inlet holes formed radially through the injection tube to communicate with the fuel passage and allow fuel to flow through the fuel passage to the injection tube.

The plurality of swirlers are tube swirlers formed on the side surface of the injection tube to guide air to be introduced through the plurality of swirlers in a circumferential direction.

Each of the tube swirlers may include a swirl guide hole formed through the side surface of the injection tube at an angle of 80 to 180 degrees, and a swirl guide connected to the swirl guide hole so as to be coupled to one side of the swirl guide hole and gradually radially directed in the circumferential direction of the other side.

The tube swirler is disposed between one end of the injection tube for introducing air and the fuel inlet holes.

Alternatively, the fuel inlet holes are arranged between one end of the injection tube for introducing air and the tube swirlers.

The fuel supply duct may further include a plurality of diffusion nozzle tubes arranged between the injection tubes and having an end cap formed at each end, the end cap having a plurality of diffusion injection holes formed therein.

The plurality of diffusion injection holes of the diffusion nozzle tube may be formed through an edge of the end cap to be inclined outwardly.

The plurality of swirlers may be hole swirlers formed through the side surface of the injection tube to contact with an inner peripheral surface and configured to guide air introduced through the plurality of swirlers in a circumferential direction.

The fuel inlet holes may be formed radially through the side surface of the injection tube to communicate with the fuel passage and allow fuel to flow through the fuel passage to the injection tube. The fuel inlet holes may be arranged between one end of the injection tube for introducing air and the hole swirlers.

According to a second aspect of the invention, there is provided a combustor including: a nozzle assembly having a plurality of nozzles in accordance with the first aspect of the invention configured to inject fuel and air, and a duct assembly coupled to one side of the nozzle assembly to burn a mixture of the fuel and the air and transmit combustion gas to a turbine.

Each of the tube swirlers may include a swirl guide hole formed through the side surface of the injection tube at an angle of 80 to 180 degrees, and a swirl guide connected to the swirl guide hole so as to be coupled to one side of the swirl guide hole and gradually radially directed in the circumferential direction of the other side.

The fuel supply duct may further include a plurality of diffusion nozzle tubes arranged between the injection tubes and having an end cap formed at each end, the end cap having a plurality of diffusion injection holes formed therein.

The plurality of diffusion injection holes of the diffusion nozzle tube may be formed through an edge of the end cap to be inclined outwardly.

The plurality of swirlers may be hole swirlers formed through the side surface of the injection tube to contact with an inner peripheral surface and configured to guide air introduced through the plurality of swirlers in a circumferential direction.

The fuel inlet holes may be formed radially through the side surface of the injection tube to communicate with the fuel passage and allow fuel to flow through the fuel passage to the injection tube. The fuel inlet holes may be arranged between one end of the injection tube for introducing air and the hole swirlers.

According to a third aspect of the invention, there is provided a gas turbine including: a compressor configured to compress air introduced from an outside, a combustor in accordance with the second aspect of the invention configured to mix fuel with the air compressed by the compressor and combust a mixture of the fuel and air to produce combustion gas, and a turbine having a plurality of turbine blades rotated by combustion gas produced in the combustor. The duct assembly of the combustor transmits the combustion gas to the turbine.

### BRIEF DESCRIPTION OF THE DRAWINGS

The above and other aspects will become more apparent from the following description of the exemplary embodiments with reference to the accompanying drawings, in which:
FIG. 1 is a view illustrating an interior of a gas turbine according to an exemplary embodiment;
FIG. 2 is a view illustrating a combustor of FIG. 1;
FIG. 3 is a front view illustrating one nozzle assembly according to an exemplary embodiment;
FIG. 4 is a longitudinal cross-sectional view of one nozzle according to an exemplary embodiment;
FIG. 5 is a perspective view illustrating a portion of the nozzle according to an exemplary embodiment;
FIG. 6 is a perspective view illustrating one injection tube according to a first exemplary embodiment;
FIG. 7 is a cross-sectional view taken along a plane passing through a tube swirler in FIG. 6;
FIG. 8 is a longitudinal cross-sectional view of the injection tube in FIG. 6;
FIG. 9 is a partial perspective view illustrating one diffusion nozzle tube;
FIG. 10 is a perspective view illustrating one injection tube according to a second exemplary embodiment;
FIG. 11 is a perspective view illustrating one injection tube according to a third exemplary configuration which is not covered by the present invention; and
FIG. 12 is a cross-sectional view taken along a plane passing through a hole swirler in FIG. 11.

### DETAILED DESCRIPTION

Various modifications and different embodiments will be described below in detail with reference to the accompanying drawings so that those skilled in the art can easily carry out the invention. It should be understood, however, that the present invention is not intended to be limited to the specific embodiments, but the present invention includes all modifications, equivalents or replacements that fall within the scope of the invention as defined in the following claims.

The terminology used herein is for the purpose of describing specific embodiments only and is not intended to limit the scope of the invention. As used herein, the singular forms "a", "an" and "the" are intended to include the plural forms as well, unless the context clearly indicates otherwise. In the invention, terms such as "comprises", "includes", or "have/has" should be construed as designating that there are such features, integers, steps, operations, components, parts, and/or combinations thereof, not to exclude the presence or possibility of adding of one or more of other features, integers, steps, operations, components, parts, and/or combinations thereof.

Hereinafter, exemplary embodiments will be described below in detail with reference to the accompanying drawings. It should be noted that like reference numerals refer to like parts throughout the various figures and exemplary embodiments. In certain embodiments, a detailed description of functions and configurations well known in the art may be omitted to avoid obscuring appreciation of the invention by those skilled in the art. For the same reason, some components may be exaggerated, omitted, or schematically illustrated in the accompanying drawings.

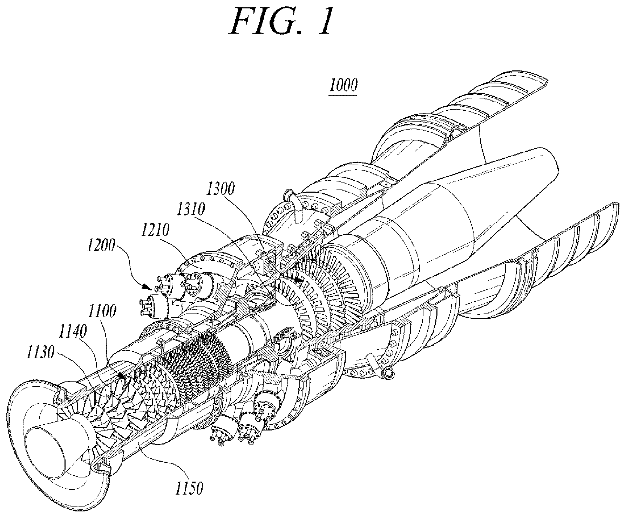

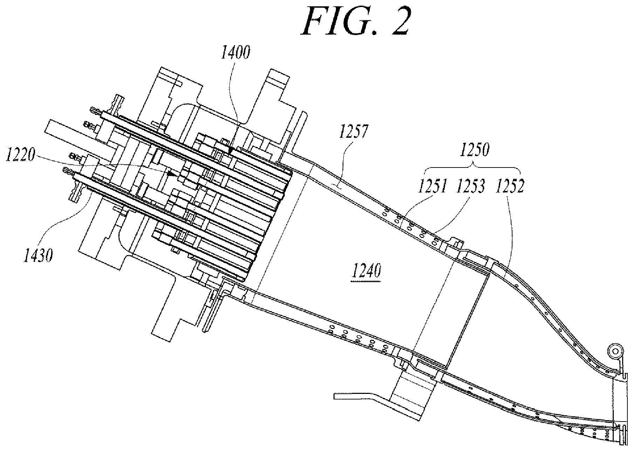

FIG. 1 is a view illustrating an interior of a gas turbine according to an exemplary embodiment. FIG. 2 is a view illustrating a combustor of FIG. 1.

The thermodynamic cycle of the gas turbine may ideally comply with the Brayton cycle. The Brayton cycle consists of four phases including isentropic compression (i.e., an adiabatic compression), isobaric heat addition, isentropic expansion (i.e., an adiabatic expansion), and isobaric heat dissipation. In other words, in the Brayton cycle, thermal energy may be released by combustion of fuel in an isobaric environment after the atmospheric air is sucked and compressed to a high pressure, high-temperature combustion gas may be expanded and converted into kinetic energy, and exhaust gas with residual energy may be discharged to the atmosphere. As such, the Brayton cycle consists of four processes including compression, heating, expansion, and exhaust.

The gas turbine 1000 employing the Brayton cycle includes a compressor 1100, a combustor 1200, and a turbine 1300. Although the following description will be described with reference to FIG. 1, the present invention may be widely applied to other turbine engines having similar configurations to the gas turbine 1000 illustrated in FIG. 1.

Referring to FIG. 1, the compressor 1100 of the gas turbine 1000 is configured to suck air from the outside and compress the air to supply air for combustion to the combustor 1200 and to supply the air for cooling to a high-temperature region of the gas turbine 1000 that is required to be cooled. In this case, because the air sucked into the compressor 1100 is subject to an adiabatic compression process therein, the pressure and temperature of the air passing through the compressor 1100 increases.

The compressor 1100 may be designed in a form of a centrifugal compressor or an axial compressor, and the centrifugal compressor is applied to a small gas turbine, whereas a multistage axial compressor is applied to a large gas turbine 1000 illustrated in FIG. 1 to compress a large amount of air. In the multistage axial compressor, the compressor blades 1130 rotate along with a rotation of rotor disks, compress the introduced air and deliver the compressed air to compressor vanes 1140 disposed at a following stage. The air is compressed gradually to a high pressure while passing through the compressor blades 1130 formed in a multistage manner.

A plurality of compressor vanes 1140 may be mounted in a compressor casing 1150 in such a way that the plurality of compressor vanes 1150 form each stage. The plurality of compressor vanes 1140 guide the compressed air flowing from compressor blades 1130 disposed at a preceding stage to compressor blades 1130 disposed at a following stage. For example, at least some of the plurality of compressor vanes 1140 may be rotatably mounted within a predetermined range, e.g., to adjust an inflow rate of air.

The compressor 1100 may be driven by a portion of the power output from the turbine 1300. To this end, a rotary shaft of the compressor 1100 may be directly connected to a rotary shaft of the turbine 1300. In the case of the large-scale gas turbine 1000, almost half of the power generated by the turbine 1300 may be consumed to drive the compressor 1100. Accordingly, an overall efficiency of the gas turbine 1000 can be enhanced by directly increasing the efficiency of the compressor 1100.

The turbine 1300 includes a plurality of rotor disks 1310, a plurality of turbine blades radially arranged on each of the rotor disks 1310, and a plurality of turbine vanes. Each of the rotor disks 1310 has a substantially disk shape, and a plurality of grooves are formed in an outer periphery thereof. Each groove is formed to have a curved surface so that the turbine blades are inserted into the grooves, and the turbine vanes are mounted in a turbine casing. The turbine vanes are fixed so as not to rotate and guide the flow direction of the combustion gas passing through the turbine blades. The turbine blades generate rotational force while rotating by the combustion gas.

The combustor 1200 is configured to mix the compressed air supplied from an outlet of the compressor 1100 with fuel for isobaric combustion to produce combustion gas with high energy. FIG. 2 illustrates an example of the combustor 1200 applied to the gas turbine 1000. The combustor 1200 includes a nozzle assembly 1220, a nozzle 1400, and a duct assembly 1250, and may include a combustor casing 1210.

The combustor casing 1210 may have a substantially cylindrical shape to surround a plurality of nozzle assemblies 1220. The nozzle assemblies 1220 may be disposed along the annular combustor casing 1210 downstream of the compressor 1100. Each of the nozzle assemblies 1220 includes a plurality of nozzles 1400, and the fuel injected from the nozzles 1400 is mixed with air at an appropriate rate so that the mixture thereof is suitable for combustion.

The gas turbine 1000 may use gas fuel containing hydrogen. The fuel may be either hydrogen fuel alone or fuel containing hydrogen and natural gas.

Referring to FIG. 2, compressed air is supplied to the nozzles 1400 along an outer surface of the duct assembly 1250, which connects a section between the nozzle assemblies 1220 and the turbine 1300 so that high-temperature combustion gas flows to heat the duct assembly 1250, thereby properly cooling the heated duct assembly 1250.

The duct assembly 1250 may include a liner 1251, a transition piece 1252, and a flow sleeve 1253. The duct assembly 1250 has a double-wall structure in which the flow sleeve 1253 surrounds the liner 1251 and the transition piece 1252. The liner 1251 and the transition piece 1252 are cooled by the compressed air permeated into an annular space 1257 formed inside the flow sleeve 1253.

The liner 1251 is a tubular member connected to the nozzle assembly 1220 of the combustor 1200, and a combustion chamber 1240 is an internal space of the liner 1251. The liner 1251 has one longitudinal end coupled to the nozzle assembly 1220 and the other longitudinal end coupled to the transition piece 1252.

The transition piece 1252 is connected to an inlet of the turbine 1300 to guide high-temperature combustion gas to the turbine 1300. The transition piece 1252 has one longitudinal end coupled to the liner 1251 and the other longitudinal end coupled to the turbine 1300. The flow sleeve 1253 serves to protect the liner 1251 and the transition piece 1252 to prevent high-temperature heat from being directly released to the outside.

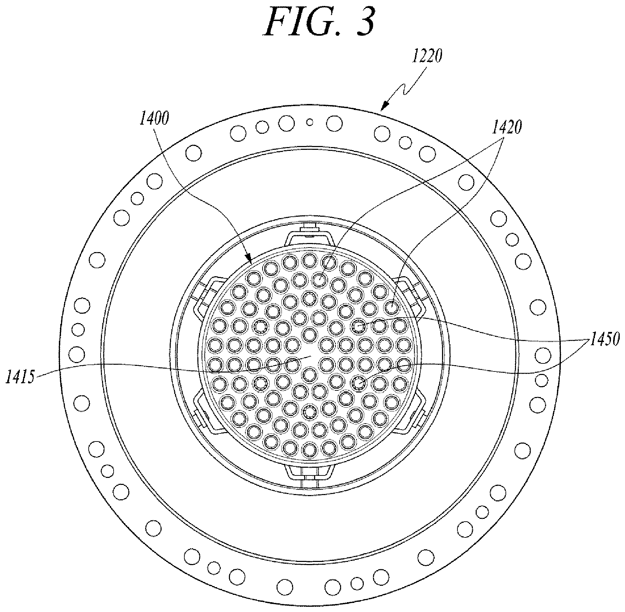

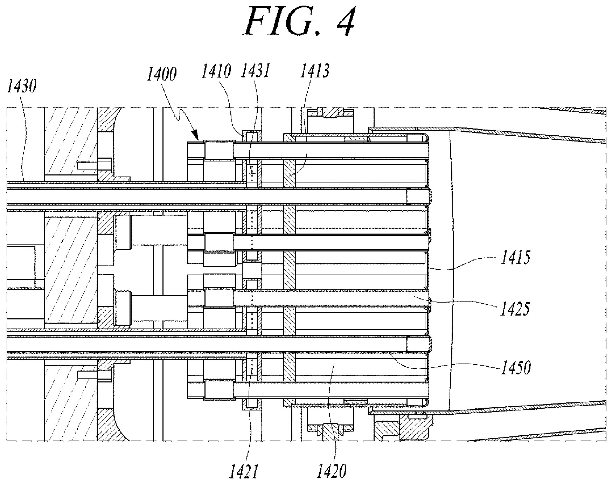

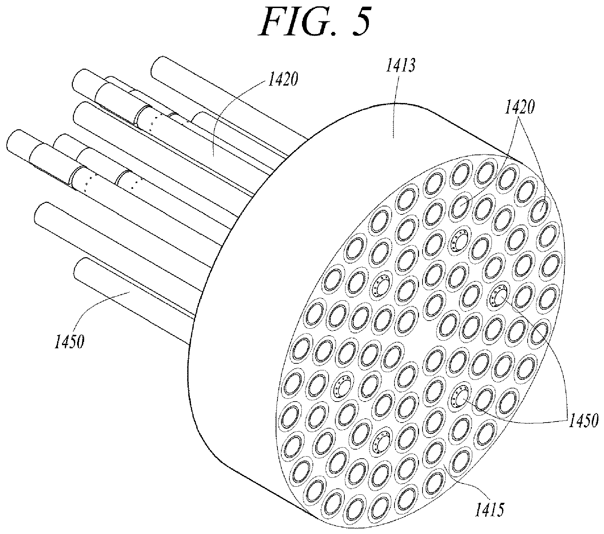

FIG. 3 is a front view illustrating one nozzle assembly according to an exemplary embodiment. FIG. 4 is a longitudinal cross-sectional view of one nozzle according to an exemplary embodiment. FIG. 5 is a perspective view illustrating a portion of the nozzle according to an exemplary embodiment.

Referring to FIGS. 3 to 5, the nozzle 1400 includes a fuel supply duct 1410 which includes a plurality of injection tubes 1420 through which air and fuel flow and a fuel passage 1431 through which fuel flows and a plurality of fuel inlet holes 1421 formed radially through each injection tube 1420 to communicate with the fuel passage 1431 so that fuel can be introduced into the injection tube 1420.

The nozzle 1400 may further include a fuel supply pipe 1430 for supplying fuel to the fuel supply duct 1410. Here, the fuel may be gas containing hydrogen. Although it is illustrated in the drawing that the fuel supply duct 1410 is divided into six fuel supply ducts and the fuel supply pipe 1430 is connected to one side of each of the divided fuel supply ducts 1410, a plurality of fuel supply ducts 1410 may be connected to the fuel supply pipe 1430.

The fuel supply duct 1410 may include the injection tubes 1420 to form several small flames using hydrogen gas. The injection tubes 1420 may be spaced apart from each other in the fuel supply duct 1410 and formed parallel to each other.

A blocking plate 1415 is installed at ends of the injection tubes 1420 to form a fuel passage through which fuel flows. The blocking plate 1415 may block the space between each injection tube 1420 to prevent fuel leakage.

The first halves of the injection tubes 1420 may be mounted to and supported by a bracket 1413. The bracket 1413 may surround the first halves of the injection tubes 1420, and the injection tubes 1420 and a plurality of diffusion nozzle tubes 1450 may be mounted through the bracket 1413.

The fuel introduced into the fuel supply duct 1410 through the fuel supply pipe 1430 flows along the fuel passage 1431. The fuel passage 1431 provided with the injection tubes 1420 passing through the fuel passage 1431 surrounds the injection tubes 1420.

The fuel inlet holes 1421 for introducing fuel may be formed along a side surface of each of the injection tubes 1420. The fuel inlet holes 1421 may be spaced apart from each other on the injection tube 1420 in a circumferential direction. Alternatively, the fuel inlet holes 1421 may be longitudinally spaced apart from each other on the injection tube 1420. The injection tube 1420 may have an injection port 1425 formed to inject a mixture of air and fuel.

The fuel supply duct 1410 may be mounted to surround the plurality of fuel inlet holes 1421 formed in the plurality of injection tubes 1420. In other words, the plurality of injection tubes 1420 are mounted to pass through the fuel supply duct 1410, and the fuel supply duct 1410 may have a thin thickness to surround the plurality of fuel inlet holes 1421 in the longitudinal direction of the injection tubes 1420. The fuel supply duct 1410 may be in the form of a single circular disk that surrounds all the injection tubes 1420 and has the fuel passage 1431 therein, or may be formed in a fan shape to mount a predetermined number of injection tubes 1420. For example, six fan-shaped fuel supply ducts 1410 may be mounted in the form of a circular disk in overall contour.

Accordingly, the fuel introduced through the fuel supply pipe 1430 flows into the injection tubes 1420 through the fuel inlet holes 1421 while flowing to the fuel passage 1431 inside the fuel supply duct 1410, and is injected into the combustion chamber together with air. The air and fuel introduced into the injection tubes 1420 may be mixed and injected through the injection ports 1425 for combustion. Therefore, air and fuel can be mixed more uniformly to form a stable flame.

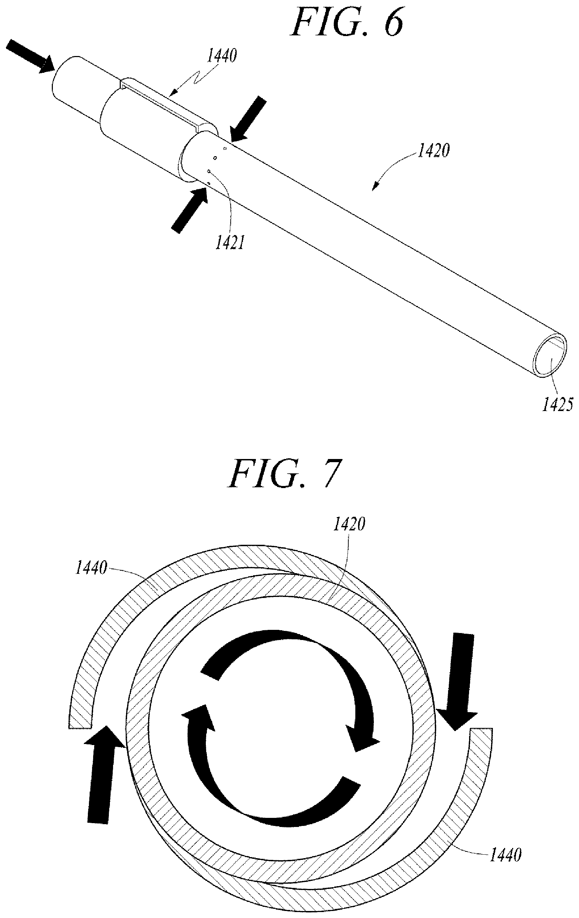

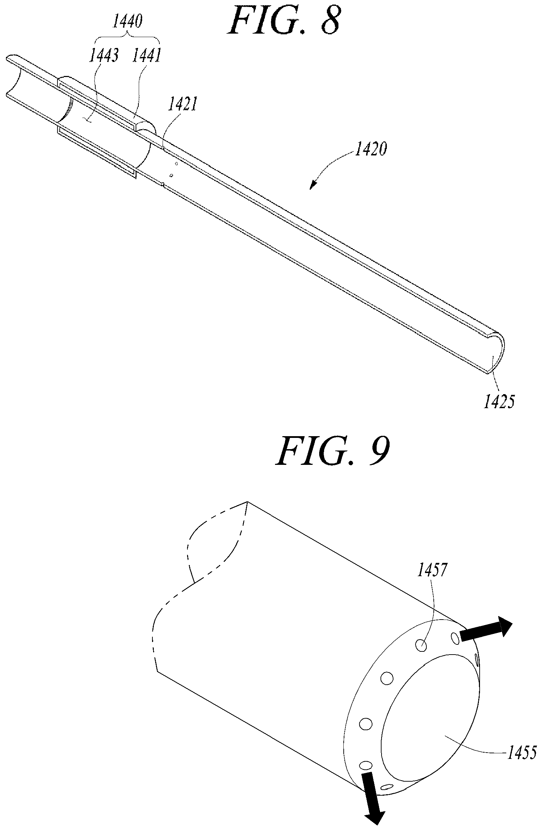

FIG. 6 is a perspective view illustrating one injection tube according to a first exemplary embodiment of the invention. FIG. 7 is a cross-sectional view taken along a plane passing through a tube swirler in FIG. 6. FIG. 8 is a longitudinal cross-sectional view of the injection tube in FIG. 6. FIG. 9 is a partial perspective view illustrating one diffusion nozzle tube.

Each of the injection tubes 1420 includes a plurality of swirlers formed on the side surface thereof to guide air from outside the injection tube to be introduced thereinto for swirling.

Referring to FIG. 6, the swirlers are tube swirlers 1440 formed on a side surface of the injection tube 1420 to guide air introduced through the swirlers in the circumferential direction. Although two tube swirlers 1440 are illustrated to be formed in one injection tube 1420, two to four tube swirlers 1440 may be formed.

Referring to FIG. 8, each of the tube swirlers 1440 may include a swirl guide hole 1443 formed through the side surface of the injection tube 1420 at an angle of 80 to 180 degrees, and a swirl guide 1441 connected to the swirl guide hole 1443 so as to be coupled to one side of the swirl guide hole 1443 and gradually radially directed in the circumferential direction of the other side.

The swirl guide hole 1443 may include two swirl guide holes formed through the side surface of the injection tube 1420 at an angle close to 180 degrees, each having a rectangular shape. The swirl guide 1441 may have a curved shape having a slightly larger radius of curvature than the side surface of the injection tube 1420. One end of the swirl guide 1441 may be integrally connected to one end of the swirl guide hole 1443, and the other end may be formed to be spaced apart from the other end of the swirl guide hole 1443 by a predetermined distance in a radial direction. The swirl guide 1441 may have both side edges connected integrally to both ends of the swirl guide hole 1443. Thus, as illustrated in FIG. 7, air outside the injection tube 1420 may be introduced into the inlets of the pair of swirl guides 1441 and then flow into the injection tube 1420 through the swirl guide holes 1443 while swirling.

For example, if four tube swirlers 1440 are formed in one injection tube 1420, four swirl guide holes 1443 and four swirl guides 1441 may be formed at an angle of less than 90 degrees.

The fuel inlet holes 1421 may be formed radially through the side surface of the injection tube 1420 to communicate with the fuel passage, so that fuel is introduced into the injection tube 1420 through the fuel inlet holes 1421. As illustrated in FIGS. 6 and 8, eight fuel inlet holes 1421 may be formed through the side surface of the injection tube 1420, each having a circular shape. The fuel inlet holes 1421 may be spaced apart from each other by a predetermined distance, and may be formed to face a center of the injection tube 1420.

In the injection tube 1420, the tube swirler 1440 is disposed between one end of the injection tube 1420 for introducing air and the fuel inlet holes 1421. Therefore, the primary air flowing into one end of the injection tube 1420 and the secondary air flowing into and swirling through the tube swirlers 1440 may be properly mixed in the injection tube 1420 with the gas fuel introduced through the fuel inlet holes 1421.

Referring to FIGS. 4, 5, and 9, the fuel supply duct 1410 may include a plurality of diffusion nozzle tubes 1450 arranged between the injection tubes 1420. The diffusion nozzle tube 1450 may have an end cap 1455 formed at an end thereof, and the end cap 1455 may have a plurality of diffusion injection holes 1457 formed therein.

FIG. 5 illustrates an example in which a plurality (e.g., 84) of injection tubes 1420 and a plurality (e.g., 6) of diffusion nozzle tubes 1450 are arranged. As illustrated in FIG. 9, the end cap 1455 may be in the form of a circular disk having a predetermined thickness and may be connected integrally to the diffusion nozzle tube 1450 to block one end thereof. The end cap 1455 may have an edge chamfered to be inclined. The diffusion injection holes 1457 may be formed perpendicular to the chamfered edge of the end cap 1455.

The diffusion nozzle tube 1450 may have the diffusion injection holes 1457 formed therethrough and inclined at a predetermined angle with respect to the center of the diffusion nozzle tube 1450. In other words, the diffusion injection holes 1457 in the diffusion nozzle tube 1450 may be formed through the edge of the end cap 1455 to be inclined at a predetermined angle in a tangential direction tangential.

Accordingly, the diffusion nozzle tube 1450 may include the diffusion injection holes 1457 inclined with respect to the longitudinal direction to generate a swirl flow of air introduced into the diffusion nozzle tube 1450 so that it can be well mixed with the air flowing into the injection tube 1420 for combustion. For example, in a section of ignition and starting, the high air-to-fuel equivalence ratio increases the likelihood of backfire. However, the diffusion nozzle tubes 1450 arranged between the injection tubes 1420 can prevent backfire.

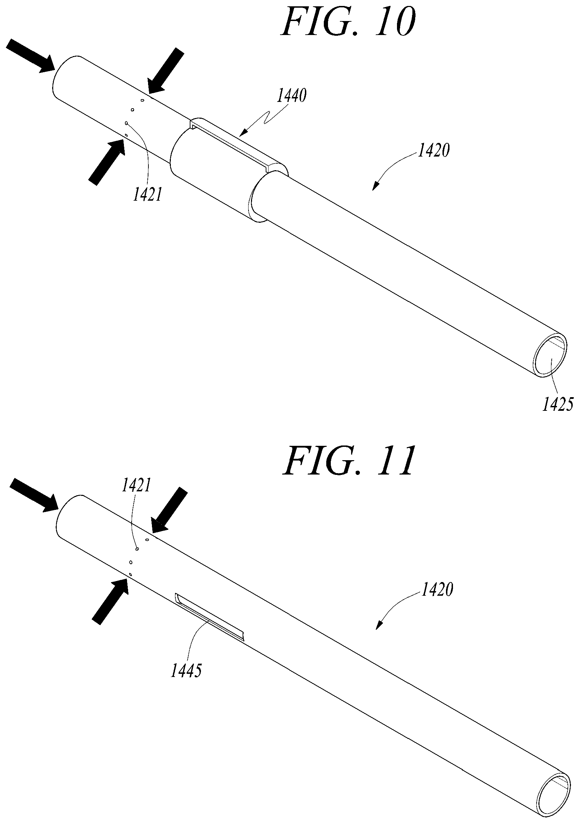

FIG. 10 is a perspective view illustrating one injection tube according to a second exemplary embodiment of the invention.

Referring to FIG. 10, the injection tube 1420 has a plurality of fuel inlet holes 1421 arranged between one end of the injection tube 1420 for introducing air and a plurality of tube swirlers 1440.

In the injection tube 1420 of FIG. 6, the fuel inlet holes 1421 are arranged downstream of the tube swirlers 1440 through which secondary air is introduced based on the flow direction of air. On the other hand, in the injection tube 1420 of FIG. 10, the tube swirlers 1440 are disposed downstream of the fuel inlet holes 1421. Therefore, the primary air introduced into one end of the injection tube 1420 may be first mixed with the gas fuel introduced through the fuel inlet holes 1421, and then remixed with the secondary air introduced through the tube swirlers 1440.

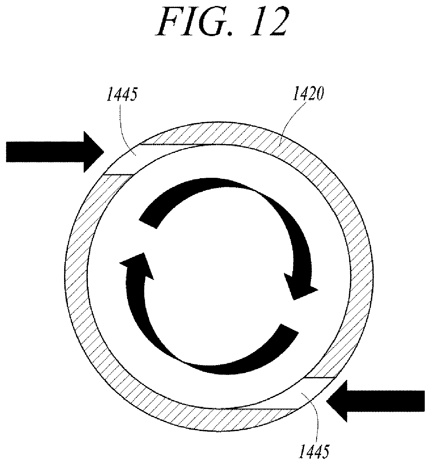

FIG. 11 is a perspective view illustrating one injection tube according to a third exemplary configuration not forming part of the present invention. FIG. 12 is a cross-sectional view taken along a plane passing through a hole swirler in FIG. 11.

Referring to FIGS. 11 and 12, the injection tube 1420 may include a hole swirler 1445 formed through the side surface of the injection tube 1420 to be in contact with the inner peripheral surface and configured to guide air introduced through the swirler in the circumferential direction.

Although the hole swirler 1445 is illustrated to have two hole swirlers 1445, three or four hole swirlers may be formed. Each of the hole swirlers 1445 may have a rectangular shape and may be elongated in the longitudinal direction when viewed from the outside of the injection tube 1420. The hole swirler 1445 may be formed through the injection tube 1420 to contact the inner peripheral surface so that the flow of air through the hole swirler 1445 is swirled along the inner peripheral surface of the injection tube 1420. The secondary air introduced into the injection tube 1420 through the hole swirlers 1445 may be mixed with primary air and fuel while swirling in one direction in the injection tube 1420.

As illustrated in FIG. 11, the injection tube 1420 may have a plurality of fuel inlet holes 1421 formed radially on the side surface of the injection tube 1420 to communicate with the fuel passage and allow fuel to flow into the injection tube 1420 therethrough. The fuel inlet holes 1421 may be arranged between one end of the injection tube 1420 for introducing air and the hole swirlers 1445.

The arrangement of the fuel inlet holes 1421 and the hole swirlers 1445 in the injection tube 1420 of the third exemplary configuration is the same as in the injection tube 1420 of the first exemplary embodiment, except for the shape of each hole swirler 1445.

As described above, according to the combustor nozzle, the combustor, and the gas turbine including the same, because the swirlers and the fuel inlet holes are formed in each injection tube, it is possible to minimize backfire and improve fuel-air mixing characteristics to reduce NO_{X} emission and increase flame stability.

While one or more exemplary embodiments have been described with reference to the accompanying drawings, it will be apparent to those skilled in the art that various variations and modifications may be made by adding, changing, or removing components without departing from the scope of the invention as defined in the appended claims.

## Claims

1. A nozzle (1400) for a gas turbine combustor configured to burn fuel containing hydrogen, comprising:
a fuel supply duct (1410) comprising a plurality of injection tubes (1420) through which air and fuel flow and a fuel passage (1431) through which fuel flows;
a plurality of tube swirlers (1440) formed on a side surface of each of the plurality of injection tubes (1420) to guide air outside the injection tube (1420) to be introduced into the injection tube (1420) in a circumferential direction for swirling; and
a plurality of fuel inlet holes (1421) formed radially through each injection tube (1420) to communicate with the fuel passage (1431) and allow fuel to flow through the fuel passage (1431) to the injection tube (1420),
**characterized in that**:
the respective tube swirler (1440) is disposed between one end of the respective injection tube (1420) for introducing air and the fuel inlet holes (1421) of the respective injection tube (1420), or
the fuel inlet holes (1421) of the respective injection tube (1420) are arranged between the end of the injection tube for introducing air and the respective tube swirler (1440).

2. The nozzle according to claim 1,
wherein each of the tube swirlers (1440) comprises a swirl guide hole (1443) formed through the side surface of the injection tube (1420) at an angle of 80 to 180 degrees, and a swirl guide (1441) connected to the swirl guide hole so as to be coupled to one side of the swirl guide hole and gradually radially directed in the circumferential direction of the other side.

3. The nozzle according to claim 1,
wherein the fuel supply duct (1410) further comprises a plurality of diffusion nozzle tubes (1450) arranged between the injection tubes (1420) and having an end cap (1455) formed at each end, the end cap (1455) having a plurality of diffusion injection holes (1457) formed therein.

4. The nozzle according to claim 3,
wherein the plurality of diffusion injection holes (1457) of the diffusion nozzle tube (1450) are formed through an edge of the end cap (1455) to be inclined outwardly.

5. A gas turbine combustor (1200) comprising:
a nozzle assembly (1220) having a plurality of nozzles (1400) according to claim 1 configured to inject fuel and air; and
a duct assembly (1250) coupled to one side of the nozzle assembly (1220) to burn a mixture of the fuel and air and transmit combustion gas to a turbine.

6. The combustor according to claim 5,
wherein each of the tube swirlers (1440) comprises a swirl guide hole (1443) formed through the side surface of the injection tube (1420) at an angle of 80 to 180 degrees, and a swirl guide (1441) connected to the swirl guide hole so as to be coupled to one side of the swirl guide hole (1443) and gradually radially directed in the circumferential direction of the other side.

7. The combustor according to claim 5,
wherein the fuel supply duct (1410) further comprises a plurality of diffusion nozzle tubes (1450) arranged between the injection tubes (1420) and having an end cap (1455) formed at each end, the end cap (1455) having a plurality of diffusion injection holes (1457) formed therein.

8. The combustor according to claim 7,
wherein the plurality of diffusion injection holes of the diffusion nozzle tube (1450) are formed through an edge of the end cap (1455) to be inclined outwardly.

9. A gas turbine (1000) comprising:
a compressor (1100) configured to compress air introduced from an outside;
a combustor (1200) according to claim 5, the combustor (1200) being configured to mix fuel with the air compressed by the compressor (100) and combust a mixture of the fuel and air to produce combustion gas; and
a turbine (1300) having a plurality of turbine blades rotated by combustion gas produced by the combustor (1200),
wherein the duct assembly (1250) transmits the combustion gas to the turbine (1300).

## Patentansprüche

1. Düse (1400) für eine Gasturbinenbrennkammer, die so konfiguriert ist, dass sie wasserstoffhaltigen Brennstoff verbrennt, umfassend:
einen Brennstoffzufuhrkanal (1410), der eine Mehrzahl von Einspritzrohren (1420), durch die Luft und Brennstoff strömen, und einen Brennstoffdurchgang (1431), durch den Brennstoff strömt, umfasst;
eine Mehrzahl von Rohrverwirblern (1440), die auf einer Seitenoberfläche jedes der Mehrzahl von Einspritzrohren (1420) ausgebildet sind, um Luft außerhalb des Einspritzrohrs (1420) so zu führen, dass sie zur Verwirbelung in Umfangsrichtung in das Einspritzrohr (1420) eingeführt wird; und
eine Mehrzahl von Brennstoffeinlasslöchern (1421), die radial durch jedes Einspritzrohr (1420) ausgebildet sind, um mit dem Brennstoffdurchgang (1431) zu kommunizieren und Brennstoff durch den Brennstoffdurchgang (1431) zu dem Einspritzrohr (1420) strömen zu lassen,
**dadurch gekennzeichnet, dass**
der jeweilige Rohrverwirbler (1440) zwischen einem Ende des jeweiligen Einspritzrohrs (1420) zum Einführen von Luft und den Brennstoffeinlasslöchern (1421) des jeweiligen Einspritzrohrs (1420) angeordnet ist, oder
die Brennstoffeinlasslöcher (1421) des jeweiligen Einspritzrohrs (1420) zwischen dem Ende des Einspritzrohrs zum Einführen von Luft und dem jeweiligen Rohrverwirbler (1440) angeordnet sind.

2. Düse nach Anspruch 1, wobei jeder der Rohrverwirbler (1440) ein Verwirbelungsführungsloch (1443), das durch die Seitenoberfläche des Einspritzrohrs (1420) in einem Winkel von 80 bis 180 Grad ausgebildet ist, und eine Verwirbelungsführung (1441), die mit dem Verwirbelungsführungsloch so verbunden ist, dass sie mit einer Seite des Verwirbelungsführungslochs gekoppelt und allmählich radial in Umfangsrichtung der anderen Seite ausgerichtet ist, umfasst.

3. Düse nach Anspruch 1,
wobei der Brennstoffzufuhrkanal (1410) weiterhin eine Mehrzahl von Diffusionsdüsenrohren (1450) umfasst, die zwischen den Einspritzrohren (1420) angeordnet sind und eine Endkappe (1455) aufweisen, die an jedem Ende ausgebildet ist, wobei die Endkappe (1455) eine Mehrzahl von darin ausgebildeten Diffusionseinspritzlöchern (1457) aufweist.

4. Düse nach Anspruch 3,
wobei die Mehrzahl von Diffusionseinspritzlöchern (1457) des Diffusionsdüsenrohrs (1450) durch einen Rand der Endkappe (1455) hindurch so ausgebildet sind, dass sie nach außen geneigt sind.

5. Gasturbinenbrennkammer (1200), umfassend:
eine Düsenanordnung (1220) mit einer Mehrzahl von Düsen (1400) nach Anspruch 1, die so konfiguriert sind, dass sie Brennstoff und Luft einspritzen, und eine Zufuhranordnung (1250), die mit einer Seite der Düsenanordnung (1220) gekoppelt ist, um ein Gemisch aus dem Brennstoff und der Luft zu verbrennen und Verbrennungsgas zu einer Turbine zu leiten.

6. Brennkammer nach Anspruch 5,
wobei jeder der Rohrverwirbler (1440) ein Verwirbelungsführungsloch (1443), das durch die Seitenoberfläche des Einspritzrohrs (1420) in einem Winkel von 80 bis 180 Grad ausgebildet ist, und eine Verwirbelungsführung (1441), die mit dem Verwirbelungsführungsloch so verbunden ist, dass sie mit einer Seite des Verwirbelungsführungslochs (1443) gekoppelt und allmählich radial in Umfangsrichtung der anderen Seite ausgerichtet ist, umfasst.

7. Brennkammer nach Anspruch 5,
wobei die Brennstoffzufuhrkanal (1410) weiterhin eine Mehrzahl von Diffusionsdüsenrohren (1450) umfasst, die zwischen den Einspritzrohren (1420) angeordnet sind und eine Endkappe (1455) aufweisen, die an jedem Ende ausgebildet ist, wobei die Endkappe (1455) eine Mehrzahl von darin ausgebildeten Diffusionseinspritzlöchern (1457) aufweist.

8. Brennkammer nach Anspruch 7,
wobei die Mehrzahl von Diffusionseinspritzlöchern des Diffusionsdüsenrohrs (1450) durch einen Rand der Endkappe (1455) hindurch so ausgebildet sind, dass sie nach außen geneigt sind.

9. Gasturbine (1000), umfassend:
einen Kompressor (1100), der so konfiguriert ist, dass er von außen eingeführte Luft komprimiert;
eine Brennkammer (1200) gemäß Anspruch 5, wobei die Brennkammer (1200) so konfiguriert ist, dass sie Brennstoff mit der durch den Kompressor (1100) komprimierten Luft mischt und ein Gemisch aus dem Brennstoff und der Luft verbrennt, um Verbrennungsgas zu erzeugen; und
eine Turbine (1300) mit einer Mehrzahl von Turbinenschaufeln, die durch von der Brennkammer (1200) erzeugtes Verbrennungsgas gedreht werden,
wobei die Zufuhranordnung (1250) das Verbrennungsgas zu der Turbine (1300) leitet.

## Revendications

1. Buse (1400) pour une chambre de combustion de turbine à gaz prévue pour brûler un carburant contenant de l'hydrogène, comprenant :
un conduit d'alimentation en carburant (1410) comprenant une pluralité de tubes d'injection (1420) où s'écoulent de l'air et du carburant, et un passage de carburant (1431) où s'écoule du carburant ;
une pluralité de générateurs de turbulences pour tube (1440) formés sur une surface latérale de chaque tube d'injection (1420) afin de guider l'air extérieur au tube d'injection (1420) devant être introduit dans le tube d'injection (1420) dans la direction circonférentielle pour tourbillonnement ; et
une pluralité d'orifices d'entrée de carburant (1421) formés radialement à travers chaque tube d'injection (1420) pour communiquer avec le passage de carburant (1431) et permettre au carburant de s'écouler dans le passage de carburant (1431) vers le tube d'injection (1420),
**caractérisée en ce que** :
chaque générateur de turbulences pour tube (1440) est disposé entre une extrémité du tube d'injection respectif (1420) pour introduire de l'air et les orifices d'entrée de carburant (1421) du tube d'injection respectif (1420), ou
les orifices d'entrée de carburant (1421) du tube d'injection respectif (1420) sont disposés entre l'extrémité du tube d'injection pour introduire de l'air et le générateur de turbulences pour tube respectif (1440).

2. Buse selon la revendication 1,
où chaque générateur de turbulences pour tube (1440) comprend un trou de guidage de tourbillon (1443) formé à travers la surface latérale du tube d'injection (1420) suivant un angle compris entre 80 et 180 degrés, et un guidage de tourbillon (1441) raccordé au trou de guidage de tourbillon de manière à être relié à un côté du trou de guidage de tourbillon, et dirigé de l'autre côté de manière radialement progressive dans la direction circonférentielle.

3. Buse selon la revendication 1,
où le conduit d'alimentation en carburant (1410) comprend en outre une pluralité de tubes de buse de diffusion (1450) disposés entre les tubes d'injection (1420) et pourvus d'un bouchon terminal (1455) formé à chaque extrémité, une pluralité d'orifices d'injection de diffusion (1457) étant formés dans ledit bouchon terminal (1455).

4. Buse selon la revendication 3,
où la pluralité d'orifices d'injection de diffusion (1457) du tube de buse de diffusion (1450) sont formés sur un bord du bouchon terminal (1455) de manière inclinée vers l'extérieur.

5. Chambre de combustion de turbine à gaz (1200), comprenant :
un ensemble de buses (1220) comportant une pluralité de buses (1400) selon la revendication 1, prévues pour injecter du carburant et de l'air ; et
un ensemble de conduits (1250) relié à un côté de l'ensemble de buses (1220) pour brûler un mélange du carburant et de l'air et transmettre les gaz de combustion à une turbine.

6. Chambre de combustion selon la revendication 5,
où chaque générateur de turbulences pour tube (1440) comprend un trou de guidage de tourbillon (1443) formé à travers la surface latérale du tube d'injection (1420) suivant un angle compris entre 80 et 180 degrés, et un guidage de tourbillon (1441) raccordé au trou de guidage de tourbillon de manière à être relié à un côté du trou de guidage de tourbillon (1443), et dirigé de l'autre côté de manière radialement progressive dans la direction circonférentielle.

7. Chambre de combustion selon la revendication 5,
où le conduit d'alimentation en carburant (1410) comprend en outre une pluralité de tubes de buse de diffusion (1450) disposés entre les tubes d'injection (1420) et pourvus d'un bouchon terminal (1455) formé à chaque extrémité, une pluralité d'orifices d'injection de diffusion (1457) étant formés dans ledit bouchon terminal (1455).

8. Chambre de combustion selon la revendication 7,
où la pluralité d'orifices d'injection de diffusion (1457) du tube de buse de diffusion (1450) sont formés sur un bord du bouchon terminal (1455) de manière inclinée vers l'extérieur.

9. Turbine à gaz (1000), comprenant :
un compresseur (1100) prévu pour comprimer l'air introduit depuis l'extérieur ;
une chambre de combustion (1200) selon la revendication 5, ladite chambre de combustion (1200) étant prévue pour mélanger du carburant avec de l'air comprimé par le compresseur (100) et brûler un mélange de carburant et d'air pour produire des gaz de combustion ; et
une turbine (1300) comportant une pluralité d'aubes de turbine entraînées en rotation par les gaz de combustion produits par la chambre de combustion (1200),
où l'ensemble de conduits (1250) transmet les gaz de combustion à la turbine (1300).
